# EUROPÄISCHE PATENTANMELDUNG

(11) **EP 0 897 239 A2**
(43) Veröffentlichungstag der Anmeldung: **17.02.1999**
(21) Anmeldenummer: 98114347.2
(22) Anmeldetag: 30.07.1998
(51) Int. Cl.: H04M 3/50

(54) **Programmgesteuertes Kommunikationssystem mit Zugriff auf einen Sprachspeicher**

(30) Priorität: 12.08.1997 DE 19734929
(71) Anmelder: SIEMENS AKTIENGESELLSCHAFT, 80333 München (DE)
(72) Erfinder: Roth, Roland, 45884 Gelsenkirchen (DE); Perez Ramirez, Jorge-Alberto, 58452 Witten (DE); Dziennus, Norbert, 44227 Dortmund (DE); Boettger, Detlev, 58239 Schwerte (DE)

(57) **Zusammenfassung**

Es besteht die Möglichkeit bei Nichterreichen eines gewünschten Teilnehmers für diesen eine Nachricht in einem Sprachspeicher VMSzu hinterlegen. Unter der Voraussetzung, daß eine Kennzeichnungsinformation (Rufnummer) des rufenden Teilnehmers zur Verfügung steht, wird diese in unmittelbarer Zuordnung zu der hinterlegten Nachricht gespeichert. Fragt der betreffende Teilnehmer die für ihn bestimmte Nachricht ab, so hat er die Möglichkeit, darauf eine Rückantwort einzuspeichern, der gleichfalls die Kennzeichnungsinformation des ursprünglich rufenden Teilnehmers, d. h. des Verfassers der abgefragten Nachricht, zugeordnet wird. Es wird nun sichergestellt, daß diese eine Nachricht betreffende Rückantwort automatisch dem ursprünglich rufenden Teilnehmer übermittelt wird. Dies kann dadurch erfolgen, daß durch die Systemsteuerung automatisch z. B. nach vorgegebenen Zeitkriterien (Timer) oder nach einer vorgegebenen Prioritätsliste die Verbindung zu dem Teilnehmer, dessen Rufnummer in Zuordnung zu der Rückantwort abgespeichert wurde, aufgebaut wird. Eine andere Möglichkeit besteht darin, daß bei einem nachfolgenden Anruf dieses Teilnehmers er automatisch zum Sprachspeicher vermittelt und die Übertragung der darin mit Bezug auf seine Rufnummer abgespeicherten Rückantwort vorgenommen wird.

## Beschreibung

Kommunikationssysteme dienen zur Verbindung von Endgeräten untereinander und zur Verbindung dieser Endgeräte mit an anderen Kommunikationsnetzen, z. B. öffentlichen Kommunikationsnetzen angeschlossenen Endgeräten. Für solche Kommunikationssysteme, insbesondere für private Kommunikationssysteme sind eine Fülle unterschiedlicher Leistungsmerkmale bekannt, die in vielfacher Hinsicht die Nutzungsmöglichkeiten erhöhen und den Bedienerkomfort steigern. Es sind dafür neben dem einen Verbindungsaufbau bzw. einem Verbindungsabbau zwischen dem Kommunikationssystem und einem Kommunikationsendgerät zuzuordnenden Prozedurabläufen weitere Prozedurabläufe notwendig. Diese werden in der Regel mit Hilfe einer bestimmten Signalisierungsprozedur gesteuert. Es werden durch solche Leistungsmerkmale auch Möglichkeiten geboten, die über die Grundfunktion der reinen Vermittlung hinausgehen. Eine solche mögliche zusätzliche Funktionalität ist beispielsweise die Inanspruchnahme von Sprachinformationsdiensten. Im Rahmen eines solchen Sprachspeichers, der als sogenanntes "Voice-Mail"-System realisiert sein kann, ist es möglich bei Verbindungsversuchen zu einem besetzten oder einem freien, aber nicht bedienten Teilnehmerendgerät eine gesprochene Nachricht für den jeweils zugehörigen Teilnehmer in einem seinem Teilnehmerendgerät zugewiesenen Speicherbereich zu hinterlegen. Ein solches "Voice-Mail"-System dient also grundsätzlich zum Empfangen, Speichern, Verteilen, Abrufen und zum Senden von gesprochenen Mitteilungen. Ein Teilnehmer kann zu jeder Zeit eine Information erhalten, ohne dabei direkt angesprochen zu werden. Je nach Komplexität eines solchen Systems können die einzelnen Funktionen im Rahmen einer akustischen und oder optischen Bedienerführung aktiviert werden.

Im Zusammenhang mit der Sprachspeicherung ist es auch bekannt, daß ein Teilnehmer ein Sprachpostfach für private Mitteilungen einrichtet. Bei einer solchen Lösung wird einem oder auch mehreren externen Verbindungspartnern eine für alle in gleicher Weise geltende sogenannte Zugriffsnummer zugeteilt. Durch die Übermittlung dieser Zugriffsnummer kann dann von diesem Personenkreis eine von dem Inhaber dieses Postfaches hinterlassene Mitteilung abgerufen werden. Diese Zugriffsnummer muß im System, an das der Sprachspeicher angekoppelt oder in dem er integriert ist, konfiguriert werden und sie bietet keine Möglichkeit eine als Rückantwort auf eine Nachricht gedachte Mitteilung für einen beliebigen vorabbestimmbaren Verbindungspartner zu geben. Ihr Mitteilungsinhalt ist für alle diejenigen Verbindungspartner bestimmt, denen diese Zugriffsnummer bekannt ist.

Es ist die Aufgabe der Erfindung im Zusammenhang mit einer möglichen Inanspruchnahme des Sprachspeichers durch einen Teilnehmer eines Kommunikationssystems die Funktionalität zu erweitern.

Der Lösung dieser Aufgabe erfolgt ausgehend von dem eingangs genannten Stand der Technik erfindungsgemäß durch die im kennzeichnenden Teil des Anspruches 1 enthaltenen Merkmale. Vorteilhafte Weiterbildungen der Erfindung sind in den Unteransprüchen angegeben.

Das wesentliche der Erfindung besteht darin, daß die mit der aufgebauten Verbindung bei der Hinterlegung einer gesprochenen Nachricht im Sprachspeicher zur Verfügung stehende Kennzeichnungsinformation des jeweils rufenden Teilnehmers dieser Nachricht eindeutig zugeordnet und entsprechend abgespeichert wird. Beim Abrufen dieser Nachricht durch den dafür adressierten Teilnehmer wird diese Kennzeichnungsinformation ausgelesen und für anschließende Funktionsschritte verfügbar gehalten. In den Fällen, in denen durch den die jeweilige Nachricht abfragenden Teilnehmer daraufhin eine in einem entsprechend vorgesehenen Bereich des Sprachspeichers eingesprochene Rückantwort auf diese Nachricht eingespeichert wird, erfolgt sowohl die Zuordnung der Kennzeichnungsinformation des ursprünglich rufenden Teilnehmers zu dieser Rückantwort, als auch ihre entsprechende Abspeicherung. Aufgrund dieser Zuordnung wird eine selektive Übertragung dieser Rückantwort an den ursprünglich rufenden Teilnehmer durch eine programmtechnisch festgelegte Abruf- und Übertragungsprozedur automatisch vorgenommen. Die genannte Kennzeichnungsinformation kann die Anschlußlage bzw. die Rufnummer eines internen Teilnehmers des Kommunikationssystems darstellen. Bei einem externen Teilnehmer stellt diese Kennzeichnungsinformation, z. B. die im Zuge des Aufbaus einer ISDN-Verbindung an das Zielkommunikationssystem übertragene vollständige Rufnummerninformation dar.

Durch die automatisch erfolgende Übermittlung der abgespeicherten Rückantwort des Teilnehmers, der also hierfür keine weiteren Maßnahmen vorzunehmen hat, wird bei einer vorliegenden Rückantwort auf eine Nachricht die Übermittlung sichergestellt. Es wird also mehr Freiraum sowohl für den die ursprüngliche Nachricht hinterlegenden, als auch für den eine Rückantwort einsprechenden Teilnehmer geboten. Letzterer muß vom ersteren nicht unbedingt über eine Direktverbindung erreicht werden. Es muß nicht wiederholt angerufen werden, bis die Übermittlung einer Antwort durch eine direkte Verbindung zwischen den beiden Partner übermittelt werden kann. Durch die vorgesehene Automatisierung wird gewährleistet, daß für evtl. in der Nachricht angesprochene spezifische Bedürfnisse des Teilnehmers eine gezielte Antwort gegeben wird. Es werden mit dieser Lösung somit technische und kundenfreundliche Vorteile erzielt.

Grundsätzlich können für die Übermittlung der eingespeicherten Rückantwort zwei Möglichkeiten für sich oder in Kombination vorgesehen werden. Die in Zuordnung zur Rückantwort abgespeicherte Rufnummer des die ursprüngliche Nachricht hinterlassenen internen oder externen Teilnehmers kann Systemseitig herangezogen werden, um zu diesem Teilnehmer automatisch eine Verbindung aufzubauen. Der Zeitpunkt hierfür kann programmtechnisch festgelegt werden. Eine Möglichkeit besteht im zeitgesteuerten Verbindungsaufbau nach vorgegebenen Zeitkriterien. Es können z. B. feste Zeitabstände zwischen den einzelnen Verbindungsversuchen festgelegt sein. Eine andere Möglichkeit besteht darin, den Verbindungsaufbau für die insgesamt vorliegenden Rückantworten aufgrund einer abgespeicherten Prioritätsliste zu steuern. Bei einer erfolgreichen Verbindung wird die abgespeicherte Rückantwort als gesprochene Textinformation aus dem Speicher ausgelesen und zu dem Endgerät des betreffenden Teilnehmers übertragen.

Eine andere erfindungsgemäße Möglichkeit besteht darin, bei jedem Verbindungsversuch eines internen oder externen Teilnehmers jede im Zusammenhang mit einer Rückantwort gespeicherte Kennzeichnungsinformation (Rufnummer) auf eine Übereinstimmung mit der dabei jeweils zur Verfügung stehenden aktuellen Kennzeichnungsinformation, in der Regel die Rufnummerninformation des jeweils rufenden Teilnehmers, zu überprüfen. Bei einer festgestellten Übereinstimmung wird eine Verbindung zu dem Sprachspeicher vermittelt. Die für diesen rufenden Teilnehmer vorhandene Rückantwort, die durch die vorhandene Zuordnung zu der Rufnummer eindeutig definiert ist, wird als gesprochene Textinfornation ausgelesen und zu dem Endgerät des betreffenden Teilnehmers übertragen.

Erfindungsgemäß ist vorgesehen, daß durch den die Rückantwort erhaltenden Teilnehmer über die automatisch zu ihm durch das System aufgebaute oder von ihm selbst zum Zielsystem aufgebaute Verbindung im Bedarfsfall eine unmittelbar nach der Übermittlung von ihm gesprochene Nachricht übertragbar ist. Diese wird in Zuordnung zu der ursprünglich von ihm eingesprochenen Nachricht im Sprachspeicher abgespeichert.

Weitere vorteilhafte Ausgestaltungen der Erfindung sind den restlichen Unteransprüchen zu entnehmen.

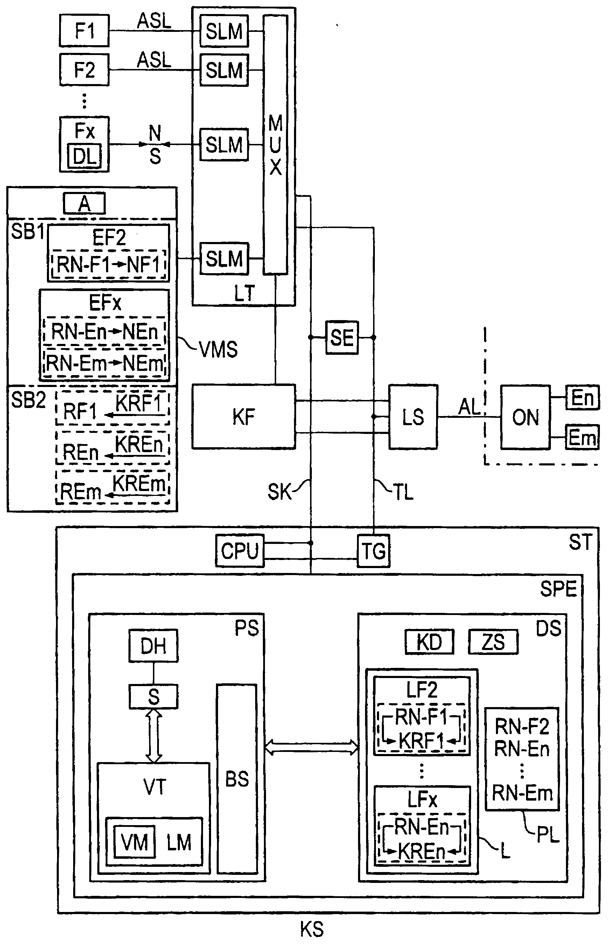

Die Erfindung wird im folgenden anhand eines figürlich dargestellten Ausführungsbeispiels erläutert. In der Figur ist als Blockschaltbild die Struktur eines programmgesteuerten privaten Kommunikationssystems KS schematisch dargestellt. Es sind lediglich die zum Verständnis der Erfindung notwendigen Komponenten gezeigt.

Zentraler Bestandteil des privaten Kommunikationssystems KS ist ein zentrales Kopffeld KF über das Endgeräte - von denen Fernsprechendgeräte F1-Fx schematisch angedeutet sind - miteinander bzw. mit zu einem öffentlichen Kommunikationssystem ON führenden Leitungen AL verbindbar sind. Das zentrale Koppelfeld steht unter dem Steuereinfluß einer zentralen Systemsteuerung ST, die neben dem Zentralprozessor CPU eine Speichereinrichtung SPE und eine Takteinheit TG enthält. Der Zentralprozessor steuert sämtliche Vermittlungsvorgänge und besorgt eine Aufbereitung und Zuteilung der Steuerdaten. Diese Aufgaben können auch auf mehrere Prozessoren aufgeteilt sein. Der Zugriff zu einer Amtsleitung AL erfolgt über die Schnittstelle LS. Diese Schnittstelle beinhaltet beispielsweise einen ISDN-Teil, der z.B. als standardisierte SO-Schnittstelle ausgebildet sein kann. Die Peripherie des Kommunikationssystems wird ergänzt durch eine Signalisierungseinheit SE, die zur Zeichenversorgung des Kommunikationssystems vorhanden ist.

Im Kommunikationssystem KS sind Leitungsanschlußeinrichtungen, symbolisiert durch die Leitungsanschlußeinrichtung LT vorhanden. Diese enthalten jeweils Teilnehmeranschlußmodule SLM. Die Teilnehmeranschlußmodule sind über Teilnehmeranschlußleitungen ASL jeweils mit einem der Kommunikationsendgeräte F1...Fx verbunden. Sie sind grundsätzlich entweder für den Anschluß von analogen oder für den Anschluß von digitalen Kommunikationsendgeräten vorgesehen. Die Nachrichtenübertragung erfolgt bei digitalen Kommunikationsendgeräten über Nachrichtenkanäle N und die Signalisierung wird über einen zusätzlichen Kanal S übermittelt. Die vom jeweiligen Kommunikationsendgerät gelieferten digitalen Sprachinformationen werden über eine Multiplexeinrichtung MUX zum Koppelfeld KF weitergegeben. Vermittlungstechnisch gesteuert werden die Leitungsanschlußeinrichtungen LT von der Systemsteuerung ST. Jede Leitungsanschlußeinrichtung ist über einen Signalisierungskanal SK mit der Systemsteuerung verbunden. Über diesen Signalisierungskanal werden die Informationen z.B. mit Hilfe der bekannten HDLC-Übermittlungsprozedur ausgetauscht. Die durch die Systemsteuerung angebotenen Taktsignale werden über eine Taktleitung TL an die Leitungsanschlußeinrichtungen verteilt. Durch die Einheit TG wird symbolisiert, das durch sie die Taktsignale zur Verfügung gestellt werden.

Der Systemprozessor CPU der Systemsteuerung ST hat Zugriff zu den in der Speichereinrichtung SPE abgelegten Informationen. Diese Speichereinrichtung ist grundsätzlich in den Programmspeicher PS und in den Datenspeicher DS unterteilt. Im Programmspeicher PS sind unter anderem das Betriebssystem BS und die zu ihm bezüglich der Peripherietechnik, der Betriebstechnik, der Sicherheitstechnik und der Vermittlungstechnik gehörenden Programme abgespeichert. Das Betriebssystem BS koordiniert die für das Kommunikationssystem KS typische Vielzahl von quasi gleichzeitig anfallenden und auch zu erledigenden Einzelaufgaben. Seine wesentliche Aufgabe besteht darin, in Abhängigkeit von eingetroffenen oder innerhalb der SystemSteuerung gebildeten Anreize dem Systemprozessor CPU, der die eigentliche ausführende Einheit der Systemsteuerung ist, Verarbeitungsvorschriften zuzuweisen. Diese beinhalten eine Reaktion auf die betreffenden Anreize. Für jeden möglichen Anreiz steht deshalb in der Systemsteuerung eine anreizindividuelle Verarbeitungsvorschrift zur Verfügung, die als jeweiliges Programmodul im Programmspeicher PS hinterlegt ist. In der Figur ist das vermittlungstechnische Programmodul VT stellvertretend für die anderen Module angedeutet. Mit LM ist ein der Vermittlungstechnik zugeordnetes Modul bezeichnet, das symbolisch für die zur Realisierung der einzelnen Leistungsmerkmale vorhandenen Programmodule steht. Zusätzlich herausgehoben ist ein Programmodul VM, das bei der Inanspruchnahme eines 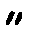 Voice-Mail"-Systems durch einen anrufenden Teilnehmers aufgerufen wird und die Initiierung der in diesem Zusammenhang vorgesehenen Prozedurabfläufe ermöglicht.

In dem Speicherteil DS ist als Teileinheit der Datenbasis der Bereich KD angedeutet. In diesem Speicherbereich sind die Kundendaten, wie z.B. die den einzelnen Endgeräten F1...Fx zugeteilten Berechtigungen und die Systemkonfiguration abgelegt. Der Datenspeicher DS dient unter anderem der Aufnahme von temporären Daten zur Programmablaufsteuerung. Es werden in ihm auch Daten übernommen, die während eines durch ein Endgerät initiierten Verbindungsaufbaus oder bei der Inanspruchnahme eines Dienstes bzw. eines Leistungsmerkmals abgefragt werden. In einem endgeräteindividuellen Speicherabschnitt werden sämtliche auf das jeweilige Endgerät bezogene Daten abgelegt. Es ist also daraus sowohl der aktuelle vermittlungstechnische Zustand - beispielsweise ob der betreffende Teilnehmer den Handapparat abgehoben hat, ob er gerufen wird usw. - als Speicherinformation für die Steuerung entnehmbar. Ebenso werden in vorgegebenen Speicherplätzen die jeweils in Anspruch genommenen Dienste bzw. Leistungsmerkmale abgespeichert. Diese Speicherabschnitte sind als dynamische Datenbasis für die einzelnen Endgeräte anzusehen.

Für jedes dieser Endgeräte ist zu seiner Steuerung ein an das jeweilige Endgerät angepaßtes Leitungsprogrammodul vorhanden, das in Zuordnung zu dem Programmspeicher PS durch das Modul DH symbolisiert ist. Jedes dieser vorhandenen Module DH bietet eine systemeinheitliche Schnittstelle zur vermittlungstechnischen Strukturebene, die durch das Vermittlungsprozedur-Programmodul VT repräsentiert ist. Der Informationsaustausch zwischen den beiden genannten Struktur- bzw. Steuerungsebenen erfolgt mittels definierten Meldungen, die beispielsweise über die angedeutete Software-Bus-Struktur SB übertragen werden. Diese kann als integraler Bestandteil des Betriebssystems angesehen werden.

Ein derartiges Kommunikationssystem KS ist grundsätzlich in seiner Struktur bekannt. Insoweit erübrigt sich eine Beschreibung der einzelnen Vorgänge bei einem Verbindungsaufbau sowie dem Verbindungsabbau.

An das im Ausführungsbeispiel dargestellte private Kommunikationssystem KS ist ein Sprachspeichersystem VMS (Voice-Mail-System) angeschaltet. Im Ausführungsbeispiel ist es als eigenständige Einheit symbolisch dargestellt. Es könnte jedoch auch ein solches Sprachspeichersystem unmittelbar als integraler Bestandteil des Kommunikationssystems ausgebildet sein. Ein solches Sprachspeichersystem kann in unterschiedlicher Komplexität realisiert sein. Je nach Organisation des Sprachspeichers können beispielsweise einzelnen Teilnehmern bestimmte Speicherbereiche zugewiesen werden, in die ein rufender Teilnehmer, der den angeforderten Zielteilnehmer nicht erreicht, eine Nachricht einspeichern kann. In ein solches zentralisiertes Speichersystem sind die Nachrichten von internen Endgeräten und von externen Endgeräten aus eingebbar. Diese Nachrichten sind von den dafür adressierten internen Teilnehmern abrufbar. Es sind hierfür unterschiedliche Bedienfunktionen, die auch durch eine Bedienerführung unterstützt werden können, bekannt. Zu diesen Bedienfunktionen gehört beispielsweise die Einleitung, Unterbrechung und der Abschluß der Nachrichtenbildung und des Nachrichtenabrufs. Die Zuschaltung des Sprachspeichersystems VMS kann beispielsweise im Besetztfall des gewünschten Teilnehmers automatisch veranlaßt werden. Es könnte auch durch den gewünschten Teilnehmer vorab eine Umleitung zu diesem Sprachspeichersystem aktiviert worden sein. Es besteht damit grundsätzlich die Möglichkeit, daß ein rufender Teilnehmer für einen von ihm gewünschten, jedoch nicht erreichbaren Teilnehmer eine Nachricht einspeichert.

Erfindungsgemäß wird ein an das Kommunikationssystem angeschaltetes bzw. in ihm integriertes Sprachspeichersystem in der Weise erweitert, daß ein Teilnehmer eine Rückantwort auf eine für ihn im Speicher vorliegende Nachricht in das Speichersystem einsprechen kann. Ohne eine weitere Aktion dieses Teilnehmers wird dann diese Rückantwort dem ursprünglich rufenden Teilnehmer übermittelt.

Voraussetzung hierzu ist das Vorliegen eines Identitätskennzeichens für diesen Teilnehmer. Bei einem internen Teilnehmer ist dies durch die bei einem Verbindungsversuch grundsätzlich stattfindende Identifizierung der Fall. Bei einem Anruf eines externen Teilnehmers wird unter der Voraussetzung einer ISDN-Verbindung (diensteintegrierendes System) bei Abgabe der jeweiligen Wahlinformation die vollständige Rufnummer des jeweiligen Endgerätes bzw. Teilnehmers zum ZielkommunikationsSystem übermittelt. Stellt also beispielsweise das öffentliche Kommunikationssystem ON ein solches ISDN-Kommunikationssystem dar und wählt der im Ausführungsbeispiel dargestellte Teilnehmer des Endgerätes En die Rufnummer des internen Endgerätes Fx, so wird über den Signalisierungskanal der ISDN-Verbindung seine vollständige Rufnummer übermittelt. Diese kann für nachfolgende Auswertungen, z. B. in den Zwischenspeicher ZS abgespeichert werden.

Es sei beispielhaft angenommen, daß der Teilnehmer des Endgerätes En bei einem Verbindungsversuch zum Teilnehmer des Endgerätes Fx an das Sprachspeichersystem vermittelt wurde. Aufgrund der für dieses Sprachspeichersystem vorgesehenen Abwicklung bzw. Bedienerführung wird von diesem Teilnehmer eine Nachricht eingesprochen und in dem Endgerät Fx zugeordneten Speicherabschnitt EFx abgespeichert. Diese Nachricht ist durch den Eintrag NEn charakterisiert. Dieser Eintrag erfolgt in Zuordnung zu seiner zum System übertragenen vollständigen Rufnummer, symbolisiert durch den Eintrag RN-En. In gleicher Weise ist angedeutet, daß eine weitere Nachricht NEm durch den Teilnehmer des externen Endgerätes Em in dem, dem Teilnehmer Fx zugeordneten Speicherabschnitt hinterlassen wurde. Weiterhin soll in dem, dem Endgerät F2 zugeordneten Speicherabschnitt EF2 durch den internen Teilnehmer des Endgerätes F1 eine Nachricht, symbolisiert durch den Eintrag NF1 eingespeichert worden sein. Dies erfolgt in Zuordnung zu der Rufnummer RN-F1 dieses internen Teilnehmers.

Zumindest bei der Einspeicherung einer Nachricht durch den Teilnehmer eines externen Endgerätes, z. B. der Nachricht NEn kann der Teilnehmer des Endgerätes En durch eine entsprechende Ansage, die z.B. in dem symbolisch angedeuteten Sprachbaustein A abgespeichert ist, darauf hingewiesen werden, daß seine Rufnummer für die Übermittlung einer evtl. vom Zielteilnehmer Fx später eingesprochenen Rückantwort abgespeichert wird. Es kann vorgesehen sein, daß durch den betreffenden rufenden Teilnehmer vor oder unmittelbar nach dem Hinterlassen seiner Nachricht als Bestätigung seines Einverständnisses hierzu eine vorgesehene Information übermittelt werden muss. Dies könnte beispielsweise durch die Eingabe eines vorgegebenen Mehrfrequenz-Codezeichen-Strings erfolgen. Das Sprachspeichersystem ist so ausgebildet, daß bei der Abspeicherung der eingesprochenen Nachricht auch ein Anfangs- und ein Endekennzeichen zugeordnet wird.

Beispielhaft wird davon ausgegangen, daß der Teilnehmer Fx nach Anhörung der vom Teilnehmer des Endgerätes En eingespeicherten Nachricht NEn eine Rückantwort geben möchte. Hierzu hat er die Möglichkeit, diese Antwort in einem dafür vorgesehenen Speicherbereich SB2 als gesprochene Textinformation zu hinterlegen. Er benutzt dann dazu die für das Sprachspeichersystem VMS vorgesehene Prozedur. Diese Rückantwort REn kann je nach Organisation dieses Speicherbereiches in einem diesem Teilnehmer Fx zugeordneten Abschnitt eingespeichert werden. Gleichzeitig wird eine diese Rückantwort REn adressenmäßig definierende Kennung KREn in einer hierfür vorgesehenen Liste L abgespeichert. Diese Liste L ist im Ausführungsbeispiel im Datenspeicher DS des Systems angelegt. Sie kann jedoch grundsätzlich auch im Sprachspeichersystem VMS selbst vorgesehen sein. Je nach Verteilung der hierzu notwendigen Intelligenz wird die Verwaltung dieser Liste durch die Systemsteuerung selbst oder durch die Steuereinheit des Sprachspeichersystems VMS vorgenommen. Zu jeder Adresse bzw. Kennung einer Rückantwort ist unmittelbar die Rufnummer desjenigen Teilnehmers in dieser Liste L abgespeichert, der die ursprüngliche Nachricht eingesprochen hat. Im Ausführungsbeispiel ist demnach der Kennung KREn für die Rückantwort REn, die Rufnummer RN-En für das Endgerät En zugeordnet.

In der Liste sind also alle Rufnummern von Teilnehmern, für die eine Rückantwort abgespeichert wurde, enthalten. Beispielhaft ist noch die Rückantwort des internen Teilnehmers des Endgerätes F2 für den internen Teilnehmer des Endgerätes F1 symbolisch dargestellt. Der Rufnummer RN-F1 des Endgerätes F1 ist die Kennung KRF1 als Adresse der Rückantwort im Speicherbereich SB2 des Sprachspeichersystems unmittelbar zugeordnet.

Durch die Möglichkeit der Formulierung und Abspeicherung einer Rückantwort auf eine Nachricht hin wird für die beteiligten Teilnehmer mehr Freiraum geschaffen. Es muß also nicht mehr zwingend eine direkte Verbindung zwischen ihnen erreicht werden. Ein anfragender Teilnehmer erhält für seine spezifischen aktuellen Bedürfnisse eine gezielte Rückantwort. Diese wird ohne weitere Inanspruchnahme des diese Rückantwort formulierenden Teilnehmers automatisch übermittelt. So können beispielsweise Mitarbeiter einer Serviceabteilung eine schnelle Antwort auf Fragen erhalten. Auch für sogenannte Kunden-Hotlines ergibt sich dadurch eine wesentliche Verbesserung. Wenn ein Kunde für einen spezifischen Mitarbeiter eine Nachricht hinterläßt, kann er ohne wiederholte Anrufe eine entsprechende Rückantwort in kurzer Zeit erwarten und bekommen. Dies gilt auch für Teilnehmer des Mobilfunksystems unter der Voraussetzung, dass bei ihrem ursprünglichen Anruf ihre Rufnummer übertragen wurde.

Eine Möglichkeit zum Erhalt einer derartigen Rückantwort besteht darin, bei einer erneuten kommenden Verbindung des z. B. externen Teilnehmers zumindest in den Fällen, in denen keine Verbindung zu dem erneut von ihm gewünschten Teilnehmer möglich ist, ihn unmittelbar an das Sprachspeichersystem weiterzuleiten. Zu diesem Zweck wird bei einem derartigen Anruf die Liste L daraufhin überprüft, ob die dabei übermittelte vollständige Rufnummer in dieser Liste enthalten ist. Trifft dies zu, so wird die der abgespeicherten Rufnummer zugeordnete Kennung bzw. Adresseninformation ausgelesen und der Speicherbereich, der die betreffende Rückantwort enthält angesteuert. Die darin enthaltene gesprochene Textinformation wird automatisch über die bestehende Verbindung übermittelt. Zum Beispiel wird bei einem erneuten Anruf des Teilnehmers des externen Endgerätes En, dessen Rufnummer RN-En bereits in der Liste L abgespeichert ist, für den von ihm gewünschten Teilnehmer Fx die von diesem eingegebene Rückantwort REn übermittelt. Bei Anrufen anderer externer Teilnehmer, deren Rufnummer in der Liste L abgespeichert ist, wird dann in entsprechender Weise die jeweilige Rückantwort auf eine Nachricht ausgespeichert und übertragen. Wie aus der Figur entnehmbar ist, kann eine solche Übermittlung auch bei einem Anruf eines internen Teilnehmers erfolgen. Dies ist für die Rückantwort RF1 des internen Teilnehmers F2 für den internen Teilnehmer F1 angedeutet.

Grundsätzlich könnte zumindest der externe Teilnehmer auch dann an das Sprachsystem angeschaltet werden, wenn er nicht erneut den von ihm gewünschten ursprünglichen internen Teilnehmer, sondern einen beliebigen anderen internen Teilnehmer anwählt. Wird jede ankommende Verbindung daraufhin geprüft, ob die übertragene Rufnummer in der Liste L enthalten ist, so kann bei einem positiven Prüfergebnis zunächst die Anschaltung an das Sprachspeichersystem vorgenommen werden. Der betreffende externe Teilnehmer erhält dann die für ihn abgespeicherte Rückantwort. Danach erfolgt dann die Verbindung zu dem von ihm gewünschten Endgerät.

Eine andere Möglichkeit der Übermittlung einer abgespeicherten Rückantwort besteht darin, dass das System selbst automatisch eine Verbindung zu demjenigen Teilnehmer aufbaut, für den diese Rückantwort im Sprachspeichersystem enthalten ist. Dies ist durch die entsprechenden Konfigurationsparameter programmtechnisch festgelegt. Es wird die im Zusammenhang mit einer solchen Rückantwort abgespeicherte Rufnummer gehend gewählt. Meldet sich dann der betreffende Teilnehmer, so kann er durch eine entsprechende Ansage darauf hingewiesen werden, daß es sich um eine Rückantwort auf eine von ihm vorher eingespeicherte Nachricht handelt. Daraufhin wird dann diese gespeicherte Rückantwort entsprechend den für das Sprachspeichersystem vorgegebenen Abläufen ausgelesen und über diese aufgebaute Verbindung zu dem betreffenden Teilnehmer übermittelt. Die Entscheidung, wann eine solche Verbindung automatisch durch das System erfolgt, wird von diesem selbst gesteuert. Hierfür könnten beispielsweise bestimmte Zeitkriterien zugrundegelegt werden. Dies bedeutet, daß ein solcher Verbindungsaufbau anhand der zum Beispiel in der Liste L abgespeicherten Rufnummern erfolgt und nach bestimmten Zeitabläufen wiederholt wird, falls eine Verbindung zunächst nicht erfolgreich ist. Kommt eine Verbindung zustande, so könnte zumindest der betreffende Eintrag in der Liste gelöscht werden. Die Löschung der eigentlichen Rückantwort, die im Sprachspeichersystem im Speicherbereich SB2 jeweils abgespeichert ist, könnte durch den Teilnehmer, der diese Rückantwort erstellt hat, selbst vorgenommen werden. Dies kann durch eine vorgegebene Prozedur erfolgen. Bis zu dem Zeitpunkt, zu dem dies erfolgt, hat der betreffende Teilnehmer die Möglichkeit, eine gegebene Rückantwort im Zweifelsfall zu belegen.

Der durch das System vorgenommene automatische Verbindungsaufbau zu Teilnehmern, für die eine Rückantwort im Sprachspeichersystem vorliegt, könnte auch auf Grund einer nach bestimmten Gesichtspunkten abgespeicherten Prioritätsliste PL vorgenommen werden. Diese Liste könnte beispielsweise auf Grund der mit den einzelnen Nachrichten zusätzlich übermittelten Rufnummern anhand der zeitlichen Reihenfolge der Anrufe erstellt werden. Der automatische Verbindungsaufbau für die Übermittlung der gespeicherten Rückantwort würde dann nach dem Prinzip 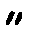 First-In-First-Out" erfolgen. Es könnten grundsätzlich auch ankommende Rufe, die eine Abspeicherung einer Nachricht im Sprachspeichersystem zur Folge haben, hinsichtlich ihrer mitübertragenen Rufnummern nach der ihnen zugrundeliegenden Bedeutung sortiert und entsprechend listenmäßig abgespeichert werden. So könnten bespielsweise Anrufe von Mitarbeitern eines Service-Dienstes vorrangig hinsichtlich der Übermittlung einer eingespeicherten Rückantwort behandelt werden.

## Patentansprüche

1. Programmgesteuertes Kommunikationssystem (KS) zur Vermittlung von daran angeschlossenen Kommunikationsendgeräten und mit der Möglichkeit für einen Teilnehmer eine gesprochene Nachricht in einen bestimmten Bereich eines Sprachspeichers VMSzu hinterlegen, die durch diesen Teilnehmer abrufbar ist, wobei eine unter anderem die vermittlungstechnische Steuerung und Koordinierung durchführende Systemsteuerung (ST) vorhanden ist, die einen Systemspeicher (SPE) zur Speicherung der Programmodule und unter anderem zur Speicherung von verbindungsindividuellen und teilnehmerseitig einzugebenden Informationen und wenigstens einem Systemprozessor (CPU) aufweist, dem unter Einfluß eines Betriebssystems (BS) die Programmodule zur Ausführung zugewiesen werden und wobei bei einem Verbindungsversuch eine Kennzeichnungsinformation -vorzugsweise die Rufnummerninformation- des jeweils rufenden Teilnehmers systemseitig zur Verfügung steht,
**dadurch gekennzeichnet,**
daß im unmittelbaren Zusammenhang mit der Hinterlegung einer gesprochenen Nachricht (NEn) im Sprachspeicher (VMS) die mit der aufgebauten Verbindung zur Verfügung stehende Kennzeichnungsinformation des rufenden Teilnehmers (En) dieser Nachricht eindeutig zugeordnet und abgespeichert wird, daß beim Anrufen der Nachricht durch den adressierten Teilnehmer (Fx) diese Kennzeichnungsinformation ausgelesen und für anschließende Funktionsschritte verfügbar ist, daß in den Fällen in denen durch den die Nachricht abfragenden Teilnehmer (Fx) eine im Sprachspeicher gespeicherte Rückantwort (REn) eingesprochen wird, dieser Rückantwort die Kennzeichnungsinformation (RN-En) des ursprünglich rufenden Teilnehmers gleichfalls zugeordnet wird, daß aufgrund dieser Zuordnung eine selektive Übertragung dieser Rückantwort an den ursprünglich rufenden Teilnehmer (En) durch eine programmtechnisch festgelegte Anruf- und Übertragungsprozedur automatisch vorgenommen wird.

2. Programmgesteuertes Kommunikationssystem nach Anspruch 1,
**dadurch gekennzeichnet,**
daß die jeweilige Kennzeichnungsinformation (RN-En) als vollständige Rufnummerninformation im Zuge des Aufbaus einer ISDN-Verbindung an das Zielkommunikationssystem (KS) übertragen wird und dort abspeicherbar und somit für nachfolgende Funktionsabläufe verfügbar ist.

3. Programmgesteuertes Kommunikationssystem nach Anspruch 1 oder 2,
**dadurch gekennzeichnet,**
daß abhängig von entsprechenden Konfigurationsparametern durch die darauf zugreifende Systemsteuerung aufgrund der abgespeicherten Kennzeichnungsinformation (Rufnummerninformation (RN-En)) eine Verbindung, entweder im Rahmen vorbestimmter zeitlicher Festlegungen und/oder bei mehreren vorhandenen Rückantworten aufgrund einer festgelegten Reihenfolge automatisch aufgebaut wird und daß nach dem Melden des jeweiligen Teilnehmers die in Zuordnung zu dieser Kennzeichnungsinformation abgespeicherte Rückantwort als gesprochene Textinformation ausgelesen und übertragen wird.

4. Programmgesteuertes Kommunikationssystem nach Anspruch 1 oder 2,
**dadurch gekennzeichnet,**
daß bei einem Verbindungsversuch jede im Zusammenhang mit einer Rückantwort gespeicherte Kennzeichnungsinformation auf eine Übereinstimmung mit der dabei zur Verfügung stehenden aktuellen Kennzeichnungsinformation des jeweils rufenden Teilnehmers überprüft wird, daß bei einer festgestellten Übereinstimmung eine Verbindung zu dem Sprachspeicher vermittelt und die für diesen Adressaten vorhandene Rückantwort als gesprochene Textinformation zu dem betreffenden Teilnehmer übertragen wird.

5. Programmgesteuertes Kommunikationssystem nach Anspruch 4,
**dadurch gekennzeichnet,**
daß durch den die Rückantwort erhaltenden Teilnehmer über die aufgebaute Verbindung im Bedarfsfall eine weitere gesprochene Nachricht übermittelbar ist, die in Zuordnung zu der Ursprungsnachricht im Sprachspeicher abgespeichert wird.

6. Programmgesteuertes Kommunikationssystem nach Anspruch 1,
**dadurch gekennzeichnet,**
daß der den Verbindungsversuch unternehmende Teilnehmer (En) im Zusammenhang mit der Einspeicherung seiner gesprochenen Nachricht (NEn) automatisch eine Ansage darüber erhält, daß seine vollständige Rufnummer in Zuordnung zu dieser Nachricht zusätzlich abgespeichert wird.

7. Programmgesteuertes Kommunikationssystem nach Anspruch 6,
**dadurch gekennzeichnet,**
daß die Abspeicherung der vollständigen Rufnummer (RN-En) nur dann vorgenommen wird, wenn im Anschluß an die Ansage der betreffende Teilnehmer (En) eine angeforderte Bestätigungsinformation zum Kommunikationssystem (KS) zur entsprechenden systemseitigen Auswertung übermittelt.

8. Programmgesteuertes Kommunikationssystem nach Anspruch 7,
**dadurch gekennzeichnet,**
daß die Bestätigungsinformation als Mehrfrequenzcode-Zeichenfolge unter Verwendung eines entsprechenden Senders übermittelbar ist.

9. Programmgesteuertes Kommunikationssystem nach einem der vorhergehenden Ansprüche,
**dadurch gekennzeichnet,**
daß die Löschung derRückantwort (REn) entweder nach ihrer vollzogenen automatischen Übermittlung aufgrund einer entsprechend gespeicherten Kennung selbsttätig nach einem vorgebbaren Zeitablauf oder vermittels einer vorgegebenen Prozedur im Bedarfsfalle durch den jeweiligen Teilnehmer (Fx) erfolgt.

10. Programmgesteuertes Kommunikationssystem nach einem der vorhergehenden Ansprüche,
**dadurch gekennzeichnet,**
daß der Sprachspeicher zur Aufnahme der eindeutig zuzuordnenden Nachricht und zur Aufnahme der Rückantwort jeweils die Teileinheit eines Sprachspeichersystems bildet, das entweder im System integriert ist oder über eine entsprechende Schnittstelle an ein Anschlußport des Kommunikationssystems angeschaltet ist.
